# EUROPÄISCHE PATENTSCHRIFT

(11) **EP 1 049 051 B1**
(45) Veröffentlichungstag und Bekanntmachung des Hinweises auf die Patenterteilung: **27.09.2006**
(21) Anmeldenummer: 00105270.3
(22) Anmeldetag: 14.03.2000
(51) Int. Cl.: G07C 5/08, B60K 35/00, B60R 16/02

(54) **Informationssystem in einem Fahrzeug**
Information system in a vehicle
Système d'information dans un véhicule

(30) Priorität: 29.04.1999 DE 19919216
(43) Veröffentlichungstag der Anmeldung: 02.11.2000
(73) Patentinhaber: DaimlerChrysler AG, 70567 Stuttgart (DE)
(72) Erfinder: Hess, Markus, 73666 Baltmannsweiler (DE); Rothe, Siegfried, 73770 Denkendorf (DE)

(56) Entgegenhaltungen:
- EP-A- 0 771 686
- EP-A- 0 903 264
- DE-A- 19 529 738
- US-A- 5 880 710

## Beschreibung

Die Erfindung bezieht sich auf ein Informationssystem in einem Fahrzeug nach dem Oberbegriff des Anspruchs 1.

Ein solches System umfaßt mehrere Informationsquellen zur Ausgabe einer jeweils zugehörigen Information bei Vorliegen einer jeweils zugehörigen Informationserzeugungsbedingung, wobei die Informationserzeugungsbedingung eine notwendige, aber nicht in jedem Fall hinreichende Bedingung zur Ausgabe der zugehörigen Information darstellt. Als auszugebende Informationen werden dabei vorliegend solche verstanden, die den Insassen des betreffenden Fahrzeugs, insbesondere dem Fahrzeugführer, zur Wahrnehmung bereitgestellt werden. Je nach Informationstyp kann es sich um Informationen handeln, welche die Fahrzeuginsassen bzw. den Fahrzeugführer kurz-, mittel- oder langfristig zu einer bestimmten Aktion auffordern oder die lediglich zur Kenntnis genommen werden brauchen. Informationen, die den Fahrzeugführer kurzfristig zu einer Aktion auffordern, sind insbesondere die Warninformationen von sogenannten Fahrerassistenzsystemen, die den Fahrer bei seiner augenblicklichen Fahrzeugführungsaufgabe unterstützen, z.B. eine Abstandsregeleinrichtung, eine Totwinkelüberwachungseinheit oder allgemeiner ein Spurwechselassistent, eine Kurvenwarneinrichtung und eine Einrichtung zur automatischen Fahrspurerkennung. Typische Informationen, auf die nur mittel- oder langfristig, d.h. nicht vor Ablauf von z.B. einigen Sekunden, reagiert werden muß, sind typische Betriebsstörungsmeldungen, wie über einen zu geringen Motorölstand, eine defekte Lampe etc., aber auch beispielsweise ein Telefonanrufsignal. Typische Informationen, die zu keiner besonderen fahrzeugbezogenen Aktion auffordern, sind z.B. zahlreiche Betriebszustandsinformationen darüber, ob bestimmte Fahrzeugkomponenten momentan aktiviert oder deaktiviert sind, aber auch die von einem Unterhaltungselektronikteil bereitgestellten Musik- und Sprachinformationen. Je nach der typischen Dauer der Informationsausgabe lassen sich nur kurzzeitig nach Eintritt eines entsprechenden Ereignisses abgegebene "Ereignisinformationen", wie typische Warninformationen, und länger andauernde "Dauerinformationen", wie solche eines Unterhaltungselektronikteils, unterscheiden.

In moderneren Kraftfahrzeugen nimmt die Zahl an Informationseinzelsystemen stetig zu, um z.B. den Fahrer bei seiner Fahraufgabe zu entlasten und zu unterstützen sowie die Insassen zu unterhalten. Dazu wird eine Menge an Warninformationen und sonstigen Informationen mittels unterschiedlicher Medien optisch, akustisch, haptisch (taktil), olfaktorisch, als Geschmacksinformation, als fühlbare Temperaturinformation etc. vermittelt. Dadurch droht eine Informationsüberflutung, welche die Gefahr birgt, daß eine wichtige Information z.B. vom Fahrer nicht wahrgenommen wird, weil er durch unwichtigere Informationen abgelenkt ist. Dieser Schwierigkeit wird in herkömmlichen Systemen nur in sehr begrenztem Umfang durch eine Gewichtung bestimmter Meldungen begegnet. So ist es beispielsweise bekannt, bei einem eingehenden Telefonanruf das Autoradio stumm zu schalten oder bei einer Sprachanweisung des Navigationssystems die Lautstärke des Radios zu reduzieren. Hingegen werden bei herkömmlichen Systemen Warnmeldungen von verschiedenen Typen von Fahrerassistenzsystemen, wie Abstandsregelung, Kurvenwarnung und automatische Fahrspurerkennung, gleichzeitig ausgegeben, wenn eine entsprechende Fahrsituation vorliegt. Zudem können herkömmlicherweise gleichzeitig mit solchen, eine schnelle Fahrzeugführungsreaktion des Fahrers anfordernden Informationen, die vorliegend als Fahrzeugführungsinformationen bezeichnet werden, weniger wichtige Informationen ausgegeben werden. So kann es passieren, daß gleichzeitig mit dem akustischen Warnton einer Abstandsregeleinrichtung die Warninformation einer automatischen Fahrspurerkennung z.B. in Form eines Nagelbandratterns und zusätzlich ein Telefonanrufton ausgegeben werden.

In der Offenlegungsschrift DE 41 40 864 A1 ist eine Vorrichtung zur multifunktionellen Diagnoseanzeige bei einem Kraftfahrzeug beschrieben, die eine Anzeigeeinrichtung und ein diese steuerndes, elektronisches Modul umfasst, das über eine entsprechende Schnittstelle eine Anzahl von Störungssignalen empfängt, die von zugehörigen Störungsinformationsquellen abgegeben werden. Das Modul steuert die Anzeigeeinrichtung derart, dass zu jedem Zeitpunkt nur eines der Störsignale an der gemeinsamen Anzeigeeinrichtung angezeigt wird, selbst wenn zum betreffenden Zeitpunkt mehrere Störungsinformationsquellen ihre zugehörige Störungssignalinformation an das Modul ausgeben. Des weiteren ist eine Schalteinrichtung vorgesehen, die vom Benutzer betätigt werden kann und dann über das Modul bewirkt, dass bei zeitgleichem Vorliegen mehrerer Störungssignale selbige nacheinander angezeigt werden können, wozu eine Priorisierung der Störungssignalinformationen vorgegeben wird.

Eine vergleichbare Vorgehensweise zur Anzeige mehrerer Informationen mit unterschiedlichen Anzeigeprioritäten auf einem Anzeigefeld wird in der Offenlegungsschrift DE 195 07 997 A1 beschrieben. Beim dortigen Verfahren wird bei gleichzeitigem Vorliegen mehrerer, von verschiedenen Informationsquellen ausgegebener Anzeigeinformationen eine solche mit hoher Anzeigepriorität, vorzugsweise eine Warninformation, in Form wenigstens eines zugehörigen Symbols angezeigt, das benutzergesteuert über ein Eingabemittel von einer Bedienperson verändert werden kann. Bei gleichzeitigem Vorliegen mehrerer anzuzeigender Informationen mit hoher Anzeigepriorität wird auf Benutzerbetätigung hin das zur ersten angezeigten Information gehörige Symbol durch ein Symbol ersetzt, das die Anzahl der vorhandenen Informationen mit hoher Anzeigepriorität darstellt.

In Dokument EP 0 903264 A1 wird eine Vorrichtung zur Anzeige von Informationen bezüglich der Funktionszustände/-ereignisse eines Fahrzeuges mit Einrichtungen zum Sammeln von Daten der Funktionszustände/-ereignisse und Einrichtungen zum Anzeigen der entsprechenden Informationen beschrieben. In dieser Vorrichtung sind zwischen den Sammeleinrichtungen und den Anzeigeeinrichtungen Einrichtungen zum Verarbeiten der Daten der Zustände/Ereignisse ausgebildet, die Einrichtungen zum Filtern und nachfolgenden Klassifizieren der Daten nach Prioritätsreihenfolgen der Wichtigkeit und Dringlichkeit der Anzeige und Einrichtungen zum Steuern der Arbeit der Anzeigeeinrichtungen aufweisen.

In Dokument EP 0 771 686 A1 wird die Darstellung von Informationen mit vorgegebenen Prioritäten in entsprechend der jeweiligen Priorität dimensionierten Anzeigebereichen beschrieben.

Der Erfindung liegt als technisches Problem die Bereitstellung eines Informationssystems der eingangs genannten Art zugrunde, das den Fahrzeuginsassen auch bei Vorhandensein einer großen Anzahl von Informationsquellen vor einer Informationsüberflutung schützt und insbesondere sicherstellt, daß er besonders wichtige, fahrzeugführungsrelevante bzw. sicherheitskritische Informationen wahrnehmen kann, ohne von anderen Informationen abgelenkt zu werden.

Die Erfindung löst dieses Problem durch die Bereitstellung eines Informationssystems in einem Fahrzeug mit den Merkmalen des Anspruchs 1.

Beim Informationssystem nach Anspruch 1 sind speziell die Erzeugungsbedingungen, welche die notwendige Voraussetzung zur Informationsausgabe bilden, für die verschiedenen Typen von Fahrzeugführungs-Informationsquellen, wie Abstandsregeleinrichtung, Spurwechselassistent, automatische Fahrspurerkennung, Kurvenwarner und Einparkhilfe, aufeinander so abgestimmt, daß zu jedem Zeitpunkt höchstens eine dieser Erzeugungsbedingungen vorliegt und daher höchstens eine dieser Fahrzeugführungs-Informationsquellen eine zugehörige Fahrzeugführungsinformation abgibt.

Diese konfliktfreie Auslegung der verschiedenen Fahrzeugführungs-Informationsquellen gewährleistet, daß der Fahrer zu jedem Zeitpunkt mit nicht mehr als einer Fahrzeugführungsinformation belastet wird, auf die er kurzfristig zu reagieren hat, um eine sichere Fahrzeugführung zu gewährleisten, und die er deshalb mit hoher Sicherheit zur Kenntnis nehmen sollte. So läßt sich z.B. verhindern, daß gleichzeitig mit einer Kurvenwarninformation eine Warninformation der automatischen Fahrspurerkennung ausgegeben wird, wenn der Fahrer der kritischen Kurvensituation mit einem Schneiden der Kurve zu begegnen versucht; oder es kann verhindert werden, daß gleichzeitig zu einer Abstandswarnung die Warninformation der automatischen Fahrspurerkennung auftritt, wenn der Fahrer der kritischen Abstandssituation durch ein Überholen ohne vorheriges Blinkersetzen begegnen will.

Beim Informationssystem nach Anspruch 2 ist eine Priorisierung der von den Informationsquellen ausgebbaren Informationen nach verschiedenen Dringlichkeitsstufen unter der Steuerung entsprechend ausgelegter Informationsmanagementmittel derart vorgesehen, daß Fahrzeugführungsinformationen, die eine schnelle Fahrerreaktion anfordern, einer vorrangigen Dringlichkeitsstufe angehören, der die anderen Informationen, bei denen eine solche rasche Fahrerreaktion nicht erforderlich ist, in einer oder mehreren nachrangigen Dringlichkeitsstufen untergeordnet sind. Die Informationsmanagementmittel, die als Zentraleinheit oder als über mehrere Fahrzeugkomponenten verteilte Intelligenz realisiert sein können, lassen hierbei die Ausgabe der weniger wichtigen Informationen aus der einen oder den mehreren nachrangigen Dringlichkeitsstufen nur intensitätsreduziert oder gar nicht zu, solange die Ausgabe einer Fahrzeugführungsinformation der vorrangigen Dringlichkeitsstufe anliegt. Dies gewährleistet, daß der Fahrer eine wichtige Fahrzeugführungsinformation mit hoher Sicherheit wahrnehmen kann, ohne von andersartigen, weniger wichtigen Informationen abgelenkt zu werden.

Bei einem nach Anspruch 3 weitergebildeten Informationssystem bewirken die Informationsmanagementmittel eine sequentielle Abarbeitung, d.h. Ausgabe, der Informationen unterschiedlicher Dringlichkeitsstufen mit absteigender Priorität. Den Dringlichkeitsstufen sind mit abnehmender Priorität ansteigende Antwortreaktionszeiten zugeordnet, welche die typischen Zeitdauern repräsentieren, während denen eine Reakton z.B. des Fahrers auf die jeweils ausgegebene Information erwartet wird.

Bei einem nach Anspruch 4 weitergebildeten Informationssystem sorgen die Informationsmanagementmittel für eine sequentielle Abarbeitung von Informationen innerhalb einer jeden der einen oder mehreren nachrangigen Dringlichkeitsstufen, sofern die betreffenden Informationserzeugungsbedingungen parallel vorliegen. Der Fahrzeuginsasse wird daher auch während der Abarbeitung von mehreren auszugebenden Informationen, die gemeinsam einer nachrangigen Dringlichkeitsstufe angehören, zu jedem Zeitpunkt nur mit einer dieser Informationen belastet und kann diese entsprechend sicher und ohne Ablenkung wahrnehmen.

Bei einem nach Anspruch 5 weitergebildeten Informationssystem ist vorgesehen, die Akustikausgabe einer nachrangigen Information jeweils während der Ausgabe einer vorrangigen Fahrzeugführungsinformation ganz zu unterdrücken und/oder sie während der Ausgabe anderer, nicht fahrzeugführungsbezogener Informationen höherer Priorität in ihrer Intensität zu reduzieren.

Bei einem nach Anspruch 6 weitergebildeten Informationssystem ist eine Dringlichkeitsabstufung der von einem Navigationssystem abgegebenen Navigationsinformationen in wenigstens zwei Stufen vorgesehen, wodurch sich früher relevant werdende Navigationsinformationen, z.B. über den Streckenverlauf nach etwa hundert Metern, mit höherer Priorität als erst später relevant werdende Navigationsinformationen, z.B. solche über den Streckenverlauf nach frühestens einigen hundert Metern, anzeigen lassen.

Bei einem nach Anspruch 7 weitergebildeten Informationssystem ist vorgesehen, eine Notrufinformation, die z.B. nach Fahreranforderung von einer Leitstelle zum Fahrzeug übertragen und dort ausgegeben werden kann, mit höchster Priorität mit Vorrang gegenüber oder jedenfalls parallel zu einer der anderen Informationen auszugeben.

Eine vorteilhafte Ausführungsform der Erfindung ist in den Zeichnungen dargestellt und wird nachfolgend beschrieben. Hierbei zeigen:
- Fig. 1: ein schematisches Blockdiagramm der Netzwerkstruktur eines vernetzten Informationssystems in einem Fahrzeug und
- Fig. 2 bis 7: jeweilige Blockdiagrammteile einer Informationspriorisierungsdarstellung für das Informationssystem von Fig. 1.

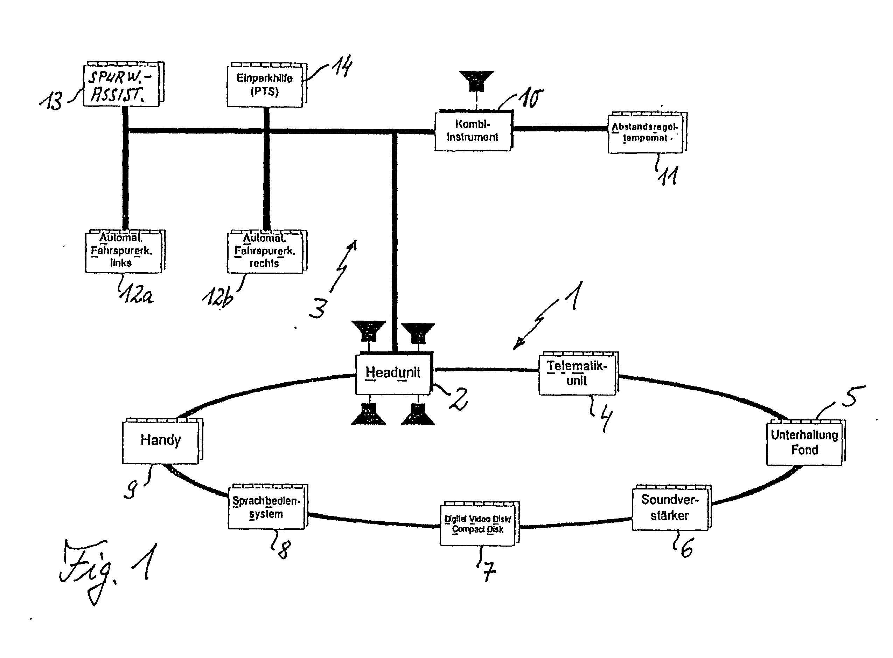

Fig. 1 zeigt ein in einem Fahrzeug implementiertes Informationssystem in seiner datenbusvernetzten Struktur. Das Informationssystem beinhaltet mehrere, in ihrem Aufbau herkömmliche Komponenten, die je nach Bedarf über einen einzigen oder über mehrere miteinander gekoppelte Datenbusse miteinander verbunden sind. Speziell beinhaltet das gezeigte Informationssystem einen Telematikbus 1 mit einer Schnittstelleneinheit 2, über die er an ein CAN-Bussystem 3 gekoppelt ist. Als Komponenten des Telematikbusses 1 sind eine Telematikzentraleinheit 4, die je nach Systemauslegung eine Navigationseinrichtung, eine Kurvenwarneinrichtung, eine Internetkommunikationseinrichtung etc. enthält, eine Fondunterhaltungseinheit 5 zur Unterhaltung von Fahrzeuginsassen im Fondbereich, ein Audioverstärker 6, ein DVD- und/oder CD-Unterhaltungselektronikkomponente 7, ein Sprachbediensystem 8 und eine Telefonkomponente 9 gezeigt. Im CAN-Busnetzwerk 3 befindet sich ein sogenanntes Kombiinstrument 10, das wie üblich unter anderem als ein zentrales Informationsausgabeinstrument zur Ausgabe einer Vielzahl optischer und akustischer Informationen dient, die ihm über den Datenbus von den verschiedenen fahrzeugseitigen Komponenten zugeführt werden. An das CAN-Bussystem 3 sind des weiteren eine Abstandsregeleinrichtung 11, eine automatische Fahrspurerkennungseinrichtung mit je einem Teil 12a, 12b für die linke und rechte Fahrzeugseite, eine Spurwechselassistenzeinheit 13 und eine Einparkassistenzeinheit 14 sowie je nach Bedarf weitere herkömmliche, nicht gezeigte Komponenten angeschlossen.

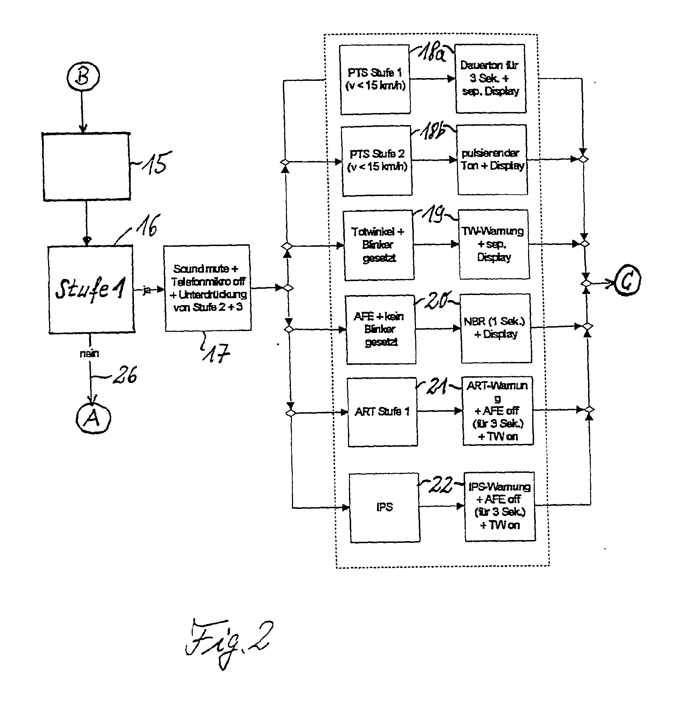

Im gezeigten Informationssystem ist ein charakteristisches Informationsmanagement mit Informationspriorisierung implementiert, wie nachfolgend unter Bezugnahme auf die diesbezüglichen Fig. 2 bis 7 erläutert. Die Durchführung des Informationsmanagements erfolgt gemäß einer vorgebbaren Prioritätsliste mit unterschiedlichen Dringlichkeitsstufen für die verschiedenen, den Fahrzeuginsassen und insbesondere dem Fahrzeugführer zu vermittelnden Informationen durch entsprechende Informationsmanagementmittel, die als eine zentrale Einheit getrennt von den übrigen, in Fig. 1 gezeigten Komponenten oder in eine dieser Komponenten integriert oder als auf mehrere dieser Komponenten verteilte Intelligenz realisiert sein können. Die Informationsmanagementmittel sind in Fig. 2 als Funktionsblock 15 dargestellt und übernehmen die für das gewünschte Informationsmanagement erforderliche Analyse der Informationen der verschiedenen Informationsquellen sowie die nach unterschiedlichen Prioritäten bzw. Dringlichkeiten gegliederte Ausgabe der Informationen, wie dies aus dem Informationsflußdiagramm hervorgeht, das sich aus der Gesamtheit der Fig. 2 bis 7 ergibt und bei dem die Pfeillinien die zeitliche Abarbeitung repräsentieren.

Die verschiedenen Informationen, die bei Vorliegen entsprechender Erzeugungsbedingungen ausgegeben werden können, sind beispielhaft in drei Dringlichkeitsstufen abnehmender Dringlichkeit unterteilt, wozu in den Informationsmanagementmitteln 15 eine entsprechende Prioritätsliste abgelegt ist. Die Informationsmanagementmittel 15 beginnen einen jeweiligen Informationsausgabezyklus, indem sie zuerst die erste, vorrangige Dringlichkeitsstufe 16 höchster Informationsausgabepriorität auswählen und daraufhin abfragen, ob Informationen dieser Dringlichkeitsstufe zur Ausgabe anstehen. Wenn dies der Fall ist, erfolgt eine Unterdrückung, speziell eine Stummschaltung ("sound mute"), der Akustikausgabe von eventuell eingeschalteten Unterhaltungselektronikkomponenten und eines Telefonmikrofons sowie eine Unterdrückung der Ausgabe von Informationen der beiden niedrigeren Dringlichkeitsstufen, wie durch einen zugehörigen Funktionsblock 17 in Fig. 2 dargestellt.

Dann erfolgt die Ausgabe der anstehenden Information höchster Dringlichkeit. Hierbei handelt es sich um Informationen einer Gruppe von Fahrzeugführungs-Informationsquellen, die verschiedene Typen von Fahrerassistenzsystemen umfassen und denen gemeinsam ist, daß sie fahrzeugführungsbezogene Informationen abgeben, die eine rasche Reaktion des Fahrers anfordern. Speziell sind dies eine mehrstufige Einparkhilfe (PTS) 18a, 18b, ein Spurwechselassistent 19 mit Totwinkel- und Rückraumüberwachung, eine automatische Fahrspurerkennungseinrichtung (AFE) 20, eine Abstandsregeleinrichtung (ART) 21 und eine Kurvenwarneinrichtung (IPS) 22. Eine erste Stufe 18a der Einparkhilfe mit stärkerer Warnintensität erzeugt einen Dauerton für eine vorgebbare Zeitdauer in Verbindung mit einer separaten optischen Anzeige, wenn beim Einparken mit einer Fahrzeuggeschwindigkeit kleiner als ein vorgebbarer Schwellwert ein Hindernis mit einem Abstand zum Fahrzeug kleiner als ein erster Abstandsschwellwert erkannt wird, während eine zweite Stufe 18b einen pulsierenden Ton in Kombination mit einer optischen Anzeige erzeugt, wenn während eines solchen Einparkvorgangs ein Hindernis mit einem Abstand größer als der erste, aber kleiner als ein zweiter vorgegebener Abstandsschwellwert erkannt wird.

Der Spurwechselassistent 19 gibt eine akustische Warnung in Verbindung mit einer separaten optischen Anzeige als Fahrzeugführungsinformation ab, wenn beim Fahren mit einer Geschwindigkeit größer als ein zugehöriger Schwellwert von z.B. 50kmh bei gesetztem Blinker ein anderes Fahrzeug im Rückraum- oder Totwinkelbereich erkannt wird, das einen Spurwechsel momentan nicht gefahrlos möglich macht. Die akustische Warnung kann z.B. als einfacher oder doppelter Hupton allein oder in Verbindung mit dem simulierten Geräusch eines vorbeifahrenden Fahrzeugs abgegeben werden. Die automatische Fahrspurerkennungseinheit (AFE) 20 gibt eine entsprechende Warninformation über das Verlassen einer Fahrspur ab, wenn dabei kein Blinker gesetzt ist, da letzteres als ein vom Fahrer beabsichtigter Fahrspurwechsel interpretiert wird, für den keine solche Warnmeldung erfolgen soll. Als Warninformation gibt die automatische Fahrspurerkennung (AFE) ein Nagelbandrattern (NBR) für eine vorgegebene Zeitdauer von z.B. 1s in Verbindung mit einer optischen Anzeige ab. Die Abstandsregeleinrichtung (ART) ist in der höchsten Dringlichkeitsstufe mit einer ersten Stufe 21 vertreten, die eine Abstandswarnung erzeugt, wenn das Fahrzeug beim Fahren mit einer über einem zugehörigen Schwellwert von z.B. 40kmh liegenden Geschwindigkeit einen vorgegebenen Abstandsschwellwert zu einem vorausfahrenden Fahrzeug unterschreitet. Gleichzeitig mit Abgabe der Abstandswarninformation wird für eine vorgegebene Zeitdauer von z.B. 3s die automatische Fahrspurerkennung (AFE) durch die Informationsmanagementmittel inaktiv gehalten, hingegen wird die Totwinkelwarnung ohne Blinkersetzen aktiviert. Damit wird vermieden, daß unerwünschterweise die automatische Fahrspurerkennung (AFE) ihre Nagelbandratter-Information abgibt, wenn der Fahrer durch seitliches Ausweichen die problematische Abstandssituation beseitigen will und dabei keinen Blinker gesetzt hat. Die Totwinkelüberwachung erlaubt eine rechtzeitige Erkennung eines gegebenenfalls im Totwinkel- oder Rückraumbereich befindlichen Fahrzeugs und gibt dann gegebenenfalls ihre zugehörige Warninformation ab, so daß dem Fahrer nach Abschluß der Abstandswarninformationsausgabe rechtzeitig signalisiert wird, daß ein seitliches Ausweichen im Moment nicht möglich ist.

Der Kurvenwarner 22 gibt eine zugehörige Kurvenwarnung ab, wenn er erkennt, daß das unmittelbar bevorstehende Durchfahren einer Kurve zu einem fahrdynamisch kritischen Zustand führen kann. Gleichzeitig wird in diesem Fall durch die Informationsmanagementmittel die automatische Fahrspurerkennung (AFE) für eine vorgebbare Zeitdauer von z.B. 3s abgeschaltet und der Spurwechselassistent (TW) angeschaltet. Mit dieser Maßnahme kann der Fahrer der kritischen Kurvensituation durch ein Schneiden der Kurve ohne Blinkersetzen begegnen, ohne daß dadurch die automatische Fahrspurerkennung (AFE) anspricht. Der Spurwechselassistent (TW) überprüft, ob der Rückraum- und Totwinkelbereich frei ist und das Schneiden der Kurve zuläßt oder ob sich dort ein Fahrzeug befindet, in welchem Fall er seine zugehörige Warninformation abgibt, die dem Fahrer signalisiert, daß er die kritische Kurvensituation auf andere Weise bewältigen muß.

Wie aus der obigen Darstellung der verschiedenen Fahrzeugführungs-Informationsquellen 18a, 18b, 19 bis 22 deutlich wird, sind diese in ihrem Informationsausgabeverhalten konfliktfrei aufeinander so abgestimmt, daß zu jedem Zeitpunkt höchstens eine von ihnen ihre zugehörige fahrzeugführungsbezogene, eine schnelle Fahrerreaktion anfordernde Warninformation abgibt. Damit wird der Fall ausgeschlossen, daß dem Fahrer gleichzeitig zwei oder mehr dieser Warninformationen höchster Priorität und niedriger Reaktionszeit angezeigt werden, was ihm ein richtiges Reagieren erschweren würde.

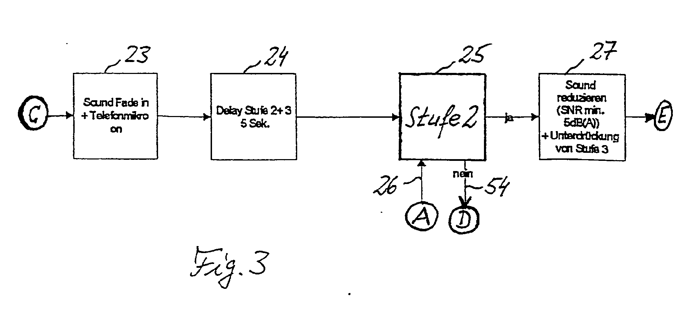

Sobald keine der fahrzeugführungsbezogenen Informationen der höchsten Dringlichkeitsstufe mehr ansteht, wird die vorherige Stummschaltung wieder beendet und das Telefonmikrofon wieder angeschaltet, wie im zugehörigen Funktionsblock 23 in Fig. 3 veranschaulicht. Gleichzeitig wird durch eine Verzögerungsstufe 24 der Übergang zur nächsten Dringlichkeitsstufe 25 zweithöchster Prioriät um eine vorgebbare Abstandszeit von z.B. 5s verzögert, um einen ausreichenden zeitlichen Abstand einer später ausgegebenen Information der zweiten Dringlichkeitsstufe nach vorheriger Ausgabe einer Information der ersten Dringlichkeitsstufe zu schaffen, der die Informationsaufnahmefähigkeit durch den Fahrer verbessert. Wenn schon anfangs keine Informationen der ersten Dringlichkeitsstufe 16 zur Ausgabe vorliegen, wird, wie mit einer Pfeillinie 26 symbolisiert, direkt zur zweiten Dringlichkeitsstufe 25 übergegangen.

Wenn auszugebende Informationen der zweiten Dringlichkeitsstufe 25 vorliegen, erfolgt zunächst eine Lautstärkereduktion für die Akustikdauerinformationen, so daß beispielhaft die Akustikdauerinformation im entsprechenden Frequenzband um mindestens 5dB leiser ist als die auszugebende Information, sowie eine gleichzeitige Unterdrückung aller Informationen der dritten, niedrigsten Dringlichkeitsstufe, wie mit einem Funktionsblock 27 in Fig. 3 symbolisiert.

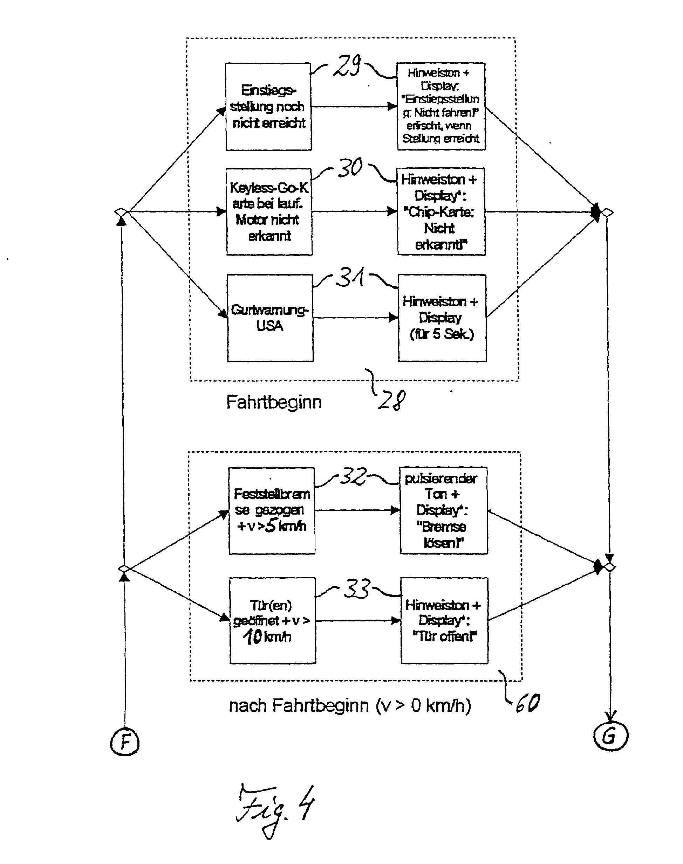

Der zweiten Dringlichkeitsstufe 25 mittlerer Dringlichkeit sind diejenigen Informationsquellen zugeordnet, deren Informationen zwar ebenfalls eine Fahrerreaktion anfordern, jedoch nicht mit der sehr kurzen Reaktionszeit der Informationen der höchsten Dringlichkeitsstufe 15 von z.B. höchstens 2s, sondern mit einer demgegenüber etwas größeren, mittleren Reaktionszeit von z.B. zwischen 2s und 5s. Die verschiedenen Informationsquellen und die von ihr erzeugbaren Informationen dieser Dringlichkeitsstufe sind gruppiert nach einem typischen Fahrbetriebsablauf in den Fig. 4 bis 6 dargestellt.

Eine erste Gruppe 28 bezieht sich auf typische Informationen bei einem Fahrtbeginn. Speziell sind dies die Information eines automatischen Einstellsystems 29, das personenindividuelle Einstellungen z.B. des Fahrersitzes vornimmt, einer Authentikationsüberwachungseinheit 30, die das Vorhandensein eines Authentikationselementes, wie einer sogenannten "Keyless-go-Karte", bei laufendem Fahrzeugmotor überwacht, und eines insbesondere in den USA verwendeten Gurtwarnsystems 31. Das Einstellsystem 29 gibt, wenn die gewünschte anfängliche Einstellung nach dem Einsteigen noch nicht erreicht ist, als Warninformation einen entsprechenden Hinweiston verbunden mit einer optischen Textanzeige ab, wobei diese Information erlischt, sobald die vorprogrammierte Einstellung erreicht ist. Die Authentikationserkennung gibt bei nicht erkanntem Authentikationselement ebenfalls einen Hinweiston verbunden mit einer optischen Textanzeige ab. In gleicher Weise besteht die Information des Gurtwarnsystems 31 darüber, daß der Gurt noch nicht angelegt wurde, aus einem Hinweiston und einer optischen Anzeige für einen vorgegebenen Zeitraum von z.B. 5s.

Eine zweite Informationsgruppe 60 der mittleren Dringlichkeitsstufe 25 betrifft die Situation kurz nach Fahrtbeginn. Sie umfaßt eine Feststellbremsenüberwachung 32 und eine Türöffnungsüberwachung 33. Die Feststellbremsenüberwachung gibt als Warninformation einen pulsierenden Ton in Verbindung mit einer optischen Textanzeige ab, wenn erkannt wird, daß die Feststellbremse noch angezogen ist, obwohl das Fahrzeug schon mit einer Geschwindigkeit von z.B. mehr als 5kmh fährt. Die Türüberwachung gibt einen Hinweiston und eine zugehörige optische Textanzeige ab, wenn noch eine oder mehrere Türen geöffnet sind, obwohl das Fahrzeug schon mit einer Geschwindigkeit von z.B. mehr als 10kmh fährt.

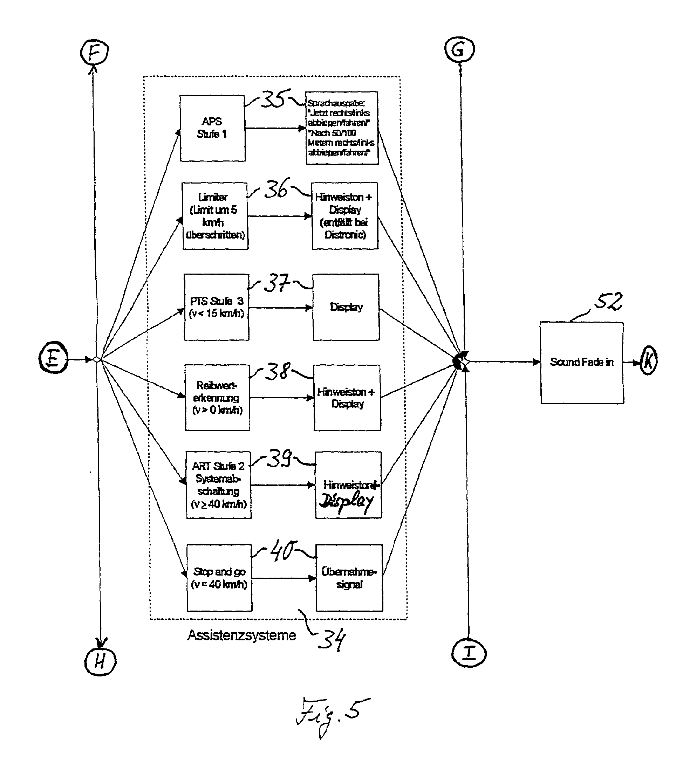

Eine dritte, in Fig. 5 dargestellte Informationsgruppe 34 beinhaltet assistenzsystembezogene Informationen mit entsprechender mittlerer Dringlichkeit. Speziell umfaßt sie eine erste Stufe 35 einer Navigationseinrichtung (APS), eine Maximalgeschwindigkeitsüberwachung 36, eine dritte Stufe 37 der Einparkhilfe (IPS), eine Reibwerterkennungseinheit 38, eine zweite Stufe 39 der Abstandsregeleinrichtung und eine Stop&Go-Abstandsregelungsübernahmeanzeige 40. Die erste Stufe 35 des Navigationssystems erzeugt als abzugebende Information eine Sprachausgabe, die den Fahrer über den Routenverlauf für typischerweise die nächsten hundert oder zweihundert Meter informiert, insbesondere über erforderliche Abbiegevorgänge. Die Maximalgeschwindigkeitsüberwachung 36 gibt einen zugehörigen Hinweiston in Verbindung mit einer optischen Anzeige ab, wenn die tatsächliche Fahrzeuggeschwindigkeit eine einstellbare, momentan zulässige Maximalgeschwindigkeit um ein vorgebbares Maß überschritten hat, wobei diese Warninformation gegebenenfalls bei Vorhandensein einer Abstandsregelung ("Distronic") entfallen kann. Die dritte Stufe 37 der Einparkhilfe (IPS) gibt eine optische Warninformation ab, wenn der Abstand eines erkannten Hindernisses zum Fahrzeug über dem zweiten Abstandsschwellwert der zweiten Stufe, jedoch unterhalb eines vorgebbaren dritten Abstandsschwellwertes liegt. Die Reibwerterkennungseinheit 38 gibt einen Hinweiston in Verbindung mit einer optischen Anzeige ab, wenn bei fahrendem Fahrzeug eine kritische Reibwertsituation erkannt wird, insbesondere µ-Split. Die zweite Stufe 39 der Abstandsregelung (ART) gibt gleichfalls einen Hinweiston in Verbindung mit einer optischen Anzeige ab, wenn eine Abschaltung der Abstandsregelung erfolgt ist, obwohl die Fahrzeuggeschwindigkeit noch über dem zugehörigen Schwellwert liegt. Die Stop&Go-Abstandsregelungsübernahmeanzeige 40 generiert ein Übernahmesignal, wenn die Fahrzeuggeschwindigkeit einen zugehörigen Schwellwert überschreitet und die vorherige Stop&Go-Abstandsregelung dadurch in die normale Abstandsregelung der Abstandsregeleinrichtung (ART) übergeht.

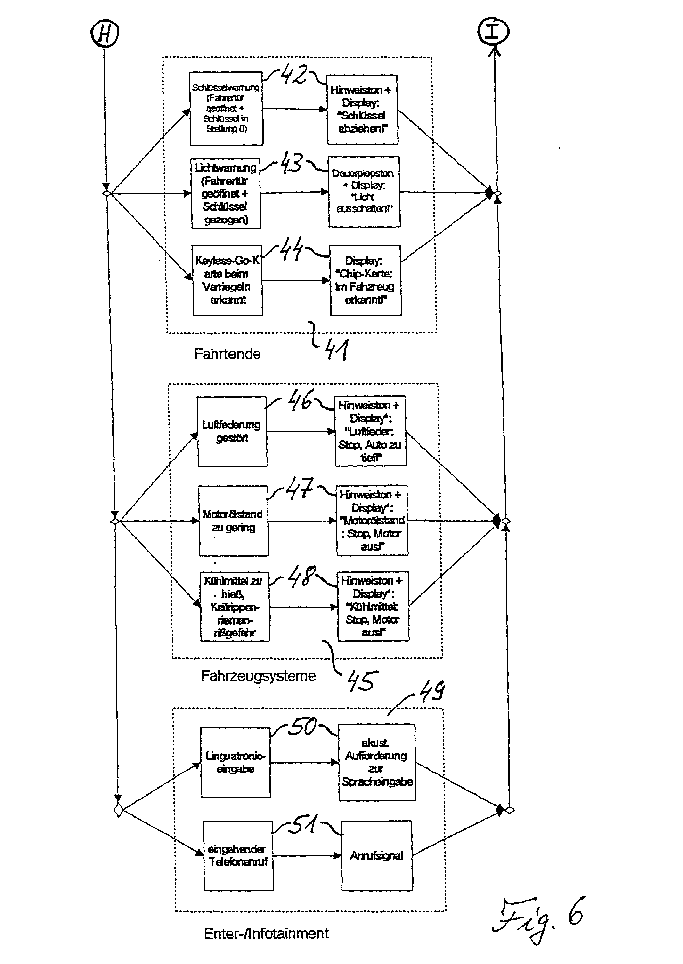

Eine vierte bis sechste Informationsgruppe 41, 45, 49 mittlerer Dringlichkeitsstufe sind in Fig. 6 dargestellt. Eine vierte Gruppe 41 hiervon betrifft typische Informationen am Fahrtende und umfaßt eine Schlüsselwarnung 42, eine Lichtwarnung 43 und eine weitere authentikationselementbezogene Informationsquelle 44. Letztere besteht in einer Überwachung des Fahrzeuginnenraums auf das Vorhandensein eines Authentikationselements, wie der besagten "Keyless-go-Karte", nach einem Verriegeln des Fahrzeugs, wobei sie in diesem Fall eine entsprechende optische Anzeige abgibt. Die Schlüsselwarnung 42 gibt einen Hinweiston in Verbindung mit einer optischen Textanzeige ab, wenn sie feststellt, daß die Fahrertür geöffnet ist, sich der Zündschlüssel aber noch in Stellung "0" befindet. Die Lichtwarnung 43 gibt einen Dauerpiepston in Verbindung mit einer optischen Textanzeige ab, wenn sie feststellt, daß die Fahrertür geöffnet und der Schlüssel abgezogen ist, aber noch ein Fahrzeuglicht brennt. Eine fünfte Gruppe 45 bezieht sich auf bestimmte Fahrzeugsystemkomponenten und umfaßt eine Luftfederungssensorik 46, eine Motorölstandssensorik 47 und eine Kühlmitteltemperatursensorik 48. Alle drei Sensorsysteme geben im Fall der Erkennung eines diesbezüglich abnormalen Betriebszustands einen zugehörigen Hinweiston in Verbindung mit einer entsprechenden optischen Textanzeige ab. Eine sechste Gruppe 49 umfaßt ein Spracheingabesystem 50, das im Informationsfall akustisch zu einer Spracheingabe auffordert, und eine Fahrzeugtelefonanlage 51, die bei einem eingehenden Telefonanruf eine Anrufsignalinformation erzeugt.

Aus der obigen Erläuterung der Gesamtheit aller Informationen der mittleren Dringlichkeitsstufe wird deutlich, daß sich ihre Erzeugungsbedingungen, welche die Voraussetzung für ihre Erzeugung darstellen, zeitlich überschneiden können. Die Informationsmanagementmittel sorgen nun dafür, daß trotzdem zu jedem Zeitpunkt höchstens eine dieser Informationen während der Bearbeitung der mittleren Dringlichkeitsstufe ausgegeben und damit dem Fahrzeuginsassen zur Kenntnis gebracht wird. Dazu teilen die Informationsmanagementmittel alle im jeweiligen Bearbeitungszyklus parallel anstehenden Informationen der zweiten Dringlichkeitsstufe gemäß einer vorgegebenen Prioritätsliste in eine Ausgabesequenz ein und steuern die Ausgabe dieser Informationen so, daß sie nacheinander gemäß dieser Prioritätsliste abgegeben werden. In einer bevorzugten Realisierung dieser Prioritätsliste erhalten die über das Kombiinstrument 10 abgegebenen Informationen die höchste Priorität, wobei dies alle genannten Informationen mit Ausnahme derjenigen der ersten Stufe 35 der Navigationseinrichtung (APS), der Telefonanlage 51 und des Spracheingabesystems 50 umfaßt. Die drei letztgenannten Informationen ordnen sich diesen Kombiinstrument-Informationen in dieser Reihenfolge mit abnehmender Priorität unter. Wenn parallel mehrere Kombiinstrument-Informationen anstehen, bei denen es sich hauptsächlich um Störmeldungen handelt, so beinhaltet deren sequentielle Abarbeitung, daß sie zyklisch für jeweils eine vorgegebene Mindestdauer von z.B. 5s optisch angezeigt werden, wobei jeweils nur die erstmalige optische Anzeige vom zugehörigen akustischen Hinweiston begleitet ist. Es versteht sich, daß die Informationsausgabe spätestens dann beendet wird, wenn ihre Erzeugungsbedingung entfallen, z.B. die zugehörige Störung behoben ist.

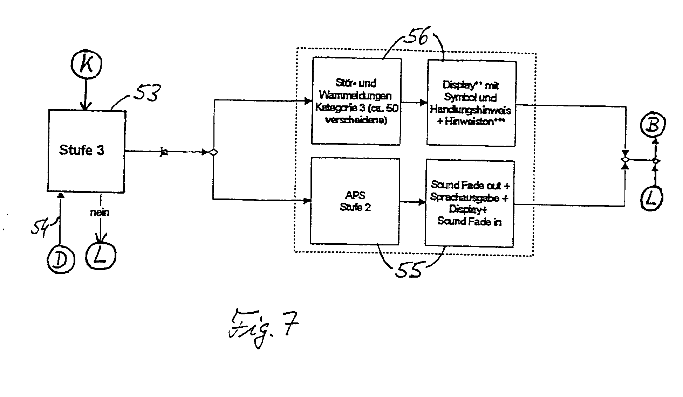

Sobald auf diese Weise alle anstehenden Informationen der zweiten Dringlichkeitsstufe abgearbeitet sind, wird die Lautstärkereduzierung wieder beendet, wie in Fig. 5 durch einen zugehörigen Funktionsblock 52 symbolisiert, und dann zur dritten, niedrigsten Dringlichkeitsstufe 53 übergegangen, wie in Fig. 7 dargestellt. Wenn schon anfangs keine auszugebende Information der mittleren Dringlichkeitsstufe vorliegt, wird direkt von der zweiten zur dritten Dringlichkeitsstufe 53 übergegangen, wie durch eine zugehörige Pfeillinie 54 dargestellt. Die der niedrigsten, dritten Dringlichkeitsstufe 53 zugeordneten Informationen sind solche, die eine allenfalls mäßige Fahrerreaktion mit einer Reaktionszeit größer als die obere Reaktionszeitschwelle der mittleren Dringlichkeitsstufe anfordern. Dies umfaßt zum einen eine zweite Stufe 55 der Navigationseinrichtung (APS) und zum anderen eine Vielzahl von durch einen gemeinsamen Funktionsblock 56 repräsentierten Stör- und Warnmeldungen über bestimmte, kurzzeitig relativ unkritische Fehlfunkionen der Lichtanlage, der Bremsanlage etc. Die Informationsausgabe für diese Stör- und Warnmeldegruppe 56 erfolgt jeweils als optisches Symbol mit Handlungshinweis und Hinweiston. Die zweite Stufe 55 der Navigationseinrichtung (APS) gibt Routenwahlinformationen für den Streckenverlauf ab typischerweise einigen hundert Metern optisch und in Sprachform aus, wozu für den entsprechenden Zeitraum eine eventuell aktivierte Akustikdauerinformation stummgeschaltet wird. Optional kann diese Stummschaltung auch für die Informationsausgaben der Stör- und Warnmeldegruppe 56 vorgesehen sein.

Wiederum verhindern die Informationsmanagementmittel auch für die Informationen der dritten Dringlichkeitsstufe eine parallele Ausgabe mehrerer solcher Informationen, indem sie deren Ausgabe sequentiell nach einer vorgebbaren Prioritätsliste steuern. Dabei erhalten die Information der zweiten Stufe 55 der Navigationseinrichtung (APS) die höhere und die übrigen Stör- und Warnmeldungen 56, die über das Kombiinstrument 10 ausgegeben werden, die niedrigere Priorität. Wenn im Kombiinstrument 10 mehrere Stör- und Warnmeldungen der dritten Dringlichkeitsstufe parallel anstehen, werden sie nach einer vorgegebenen Sequenz abwechselnd für jeweils mindestens eine gewisse Zeitdauer, z.B. 5s, angezeigt. Dabei kann eine Quittierung von Störmeldungen vorgesehen sein, die in einem Störspeicher gehalten werden, bis die zugehörige Störung behoben ist oder das Fahrtende erreicht ist.

Es versteht sich, daß als Informationsausgabetypen alle hierfür herkömmlich bekannten Typen verwendbar sind, insbesondere optisch, akustisch, olfaktorisch, haptisch (taktil), geschmacklich und temperatursensitiv. Um die akustischen Warnungen der ersten, höchsten Dringlichkeitsstufe ausreichend von anderen akustischen Quellen abzugrenzen, werden letztere stummgeschaltet, solange eine akustische Warnung der ersten Dringlichkeitsstufe ausgegeben wird. Akustische Warnungen der zweiten und dritten Dringlichkeitsstufe sollten zur Sicherstellung ihrer Wahrnehmung mit einem ausreichenden Signal-Rausch-Abstand von z.B. mindestens 5dB ausgegeben werden, wozu gegebenenfalls die Lautstärke anderer Akustikquellen entsprechend reduziert wird. Für die Abstandsregelung sind als akustische Meldungen imperative Sprachausgaben wie "Stop", "Halt" und "Bremsen" bevorzugt, ebenso für das Einparkhilfesystem. Für die Kurvenwarnung ist neben der Erzeugung einer Gaspedalbewegung als haptische Information beispielsweise eine olfaktorische Information in Form von Gerüchen nach verbranntem Gummi oder kochendem Kühlwasser oder eine akustische Information in Form eines Glasklirrgeräuschs oder eines lauten Knalls oder eines Bremsenquitschgeräuschs möglich. Als weitere Option können für Systeme mit z.B. gesetzlich vorgeschriebener optischer Warninformationsausgabe, wie durch Aufleuchten eines entsprechenden Symbols, ergänzende Informationsausgaben in Form von an einem Display angezeigten Textinformationen vorgesehen sein, die bei Bedarf durch weitergehende abrufbare Sprachinformationen ergänzt sein können.

Parallel zu den oben explizit genannten, priorisierten Informationen kann als eine weitere auszugebende Information mit höchster Priorität eine Notrufinformation im Rahmen eines sogenannten "Tele-Aid"-Systems vorgesehen sein, deren Ausgabe parallel zur Ausgabe der Informationen der ersten Dringlichkeitsstufe oder sogar noch mit Vorrang vor denselben zugelassen wird. In weiterer Ergänzung kann die Ausgabe von Fahrdynamiksystem-Informationen, z.B. von einem ESP-System, in das Informationsmanagement geeignet implementiert sein. Diese Informationen können insbesondere Informationen darüber umfassen, ob das betreffende Fahrdynamiksystem aktiv oder inaktiv ist und ob bei aktivem Fahrdynamiksystem die momentane Fahrsituation von diesem allein bewältigbar oder nicht innerhalb eines Normalbetriebsbereichs bewältigbar ist. Je nach Art dieser Informationen können sie einer geeigneten Dringlichkeitsstufe zugeordnet sein.

Es versteht sich, daß neben dem oben konkret beschriebenen Beispiel zahlreiche weitere Realisierungen der durch die beigefügten Patentansprüche bestimmten Erfindung möglich sind, wobei zur Informationsausgabe alle möglichen herkömmlichen Ausgabearten verwendbar sind und dabei auch eine spezielle Zuordnung bestimmter Ausgabearten zu bestimmten Dringlichkeitsstufen vorgesehen sein kein. Charakteristisch ist dem erfindungsgemäßen Informationssystem, daß bei Vorhandensein mehrerer fahrzeugführungsbezogener Informationen mit kurzer Reaktionszeit deren Informationsausgabe konfliktfrei ausgelegt ist, so daß zu jedem Zeitpunkt höchstens eine solche Information erzeugt und ausgegeben wird und/oder daß den vorhandenen Informationsquellen unterschiedliche Dringlichkeitsstufen zugeordnet sind, von denen Fahrzeugführungsinformationen die höchste Dringlichkeit zukommt, wobei die Dringlichkeitsstufen nacheinander abgearbeitet und mehrere parallele Informationen innerhalb einer Dringlichkeitsstufe sequentiell ausgegeben werden. Insgesamt schützt dieses Informationsmanagement den Fahrzeuginsassen vor einer Überflutung durch eine Vielzahl gleichzeitig abgegebener Informationen, so daß insbesondere auch sicherheitskritische Informationen vom Fahrzeugführer zuverlässig wahrgenommen werden können.

## Patentansprüche

1. Informationssystem in einem Fahrzeug, mit
- mehreren Informationsquellen zur Ausgabe einer jeweils zugehörigen Information bei Vorliegen einer zugehörigen Informationserzeugungsbedingung,
**dadurch gekennzeichnet, daß**
- die mehreren Informationsquellen zwei oder mehr Fahrzeugführungs-Informationsquellen (19 bis 22) unterschiedlichen Typs zur Ausgabe einer jeweiligen Fahrzeugführungsinformation umfassen, deren zugehörige Erzeugungsbedingungen so aufeinander abgestimmt sind, daß zu jedem Zeitpunkt höchstens eine der Fahrzeugführungs-Informationsquellen eine zugehörige Fahrzeugführungsinformation ausgibt,
wobei die Fahrzeugführungs-Informationsquellen (19 bis 22) unterschiedlichen Typs verschiedene Typen von Fahrerassistenzsystemen umfassen, denen gemeinsam ist, dass sie fahrzeugführungsbezogene Informationen abgeben, die eine rasche Reaktion des Fahrers anfordern.

2. Informationssystem nach Anspruch 1,
**dadurch gekennzeichnet, daß**
- die mehreren Informationsquellen zwei oder mehr Fahrzeugführungs-Informationsquellen (19 bis 22) unterschiedlichen Typs zur Ausgabe einer zugehörigen Fahrzeugführungsinformation und wenigstens eine andere Informationsquelle zur Ausgabe einer nicht fahrzeugführungsbezogenen Information umfassen und Informationsmanagementmittel (15) vorgesehen sind, welche die Informationsausgaben der Informationsquellen gemäß einer vorgebbaren Priorisierung steuern, die mehrere Dringlichkeitsstufen (16, 25, 53) umfaßt, von denen eine vorrangige Dringlichkeitsstufe höchster Priorität für die Informationsausgabe der wenigstens einen Fahrzeugführungsinformation und eine oder mehrere nachrangige Dringlichkeitsstufen für die Informationsausgabe der wenigstens einen Nichtfahrzeugführungs-information vorgesehen sind, wobei die Informationsmanagementmittel die Ausgabe von Nichtfahrzeugführungsinformationen der einen oder mehreren nachrangigen Dringlichkeitsstufen unterdrücken oder nur intensitätsreduziert zulassen, solange eine Fahrzeugführungsinformation der vorrangigen Dringlichkeitsstufe ausgegeben wird.

3. Informationssystem nach Anspruch 2, weiter
**dadurch gekennzeichnet, daß**
die von den Informationsquellen ausgebbaren Informationen in Abhängigkeit von zugehörigen Antwortreaktionszeiten den verschiedenen Dringlichkeitsstufen derart zugeordnet sind, daß die zu einer Dringlichkeitsstufe niedrigerer Dringlichkeit gehörige Antwortreaktionszeit höher ist als die zu einer Dringlichkeitsstufe höherer Dringlichkeit gehörige Anwortreaktionszeit und die Dringlichkeitsstufen von den Informationsmanagementmitteln sequentiell nach absteigender Priorität bezüglich auszugebender Informationen bearbeitet werden.

4. Informationssystem nach einem der Ansprüche 2 oder 3, weiter
**dadurch gekennzeichnet, daß**
eine sequentielle Ausgabe anstehender Informationen, die zur jeweils gleichen der einen oder mehreren nachrangigen Dringlichkeitsstufen gehören, unter der Steuerung der Informationsmanagementmittel vorgesehen ist.

5. Informationssystem nach einem der Ansprüche 1 bis 4, weiter
**dadurch gekennzeichnet, daß**
während der Ausgabe von Fahrzeugführungsinformationen eine Stummschaltung von Akustikausgaben anderer Informationen niedrigerer Priorität und/oder während der Akustikausgabe einer jeweiligen Nichtfahrzeugführungsinformation höherer Priorität eine Intensitätsreduzierung für die Akustikausgabe von Nichtfahrzeugführungsinformationen niedrigerer Priorität vorgesehen ist.

6. Informationssystem nach einem der Ansprüche 2 bis 5, weiter
**dadurch gekennzeichnet, daß**
eine Navigationseinrichtung (APS) mit wenigstens zwei Gruppen von auszugebenden Navigationsinformationen vorgesehen ist, die unterschiedlichen Dringlichkeitsstufen zugeordnet sind, wobei sich die Navigationsinformationen höherer Priorität auf den Routenverlauf in einem näheren und diejenigen mit niedrigerer Priorität auf den Routenverlauf in einem entfernteren Bereich beziehen.

7. Informationssystem nach einem der Ansprüche 1 bis 6, weiter
**dadurch gekennzeichnet, daß**
eine Notrufinformation vorgesehen ist, die mit Vorrang gegenüber der wenigstens einen Fahrzeugführungsinformation oder parallel zu dieser mit gleicher Priorität ausgebbar ist.

## Claims

1. Information system in a vehicle, comprising
- a plurality of information sources for outputting a respectively associated information item if there is an associated information generating condition,
**characterised in that**
- the plurality of information sources comprise two or more vehicle guiding information sources (19 to 22) of different types for outputting a respective vehicle guiding information item, of which the associated generating conditions are orientated to each other in such a way that at any time at the most one of the vehicle guiding information sources outputs an associated vehicle guiding information item,
- whereby the vehicle guiding information sources (19 to 22) of different types comprise different types of vehicle assistance systems, having in common that they output vehicle-guiding-related information which requires a quick reaction of the driver.

2. Information system according to claim 1,
**characterised in that**
the plurality of information sources comprise two or more vehicle guiding information sources (19 to 22) of different types for outputting an associated vehicle guiding information item and at least one other information source for outputting a non-vehicle-guiding-related information item and information management means (15) are provided which control the information outputs of the information sources according to pre-definable prioritisation which comprises a plurality of urgency stages (16, 25, 53), of which a high-ranking urgency stage of highest priority for the information output of the at least one vehicle guiding information item and one or more lower-ranking urgency stages for the information output of the at least one non-vehicle-guiding information item are provided, whereby the information management means suppress the output of non-vehicle-guiding-information of the one or more lower-ranking urgency stages or only allow it in an intensity-reduced way so long as a vehicle guiding information item of the high-ranking urgency stage is output.

3. Information system according to claim 2, further
**characterised in that**
the information which is adapted to be output by the information sources is assigned in dependence upon associated response reaction times to the different urgency stages in such a way that the response reaction time associated with an urgency stage of lower urgency is higher than the response reaction time associated with an urgency stage of higher urgency and the urgency stages are processed by the information management means sequentially according to decreasing priority concerning information to be output.

4. Information system according to one of the claims 2 or 3, further **characterised in that**
a sequential output of pending information which belongs respectively to the same of the one or more lower-ranking urgency stages is provided under the control of the information management means.

5. Information system according to one of the claims 1 to 4, further **characterised in that**
during the output of vehicle guiding information a mute circuit of acoustic outputs of other information of lower priority is provided and / or during the acoustic output of a respective non-vehicle-guiding information item of higher priority an intensity reduction is provided for the acoustic output of non-vehicle-guiding-information of lower priority.

6. Information system according to one of the claims 2 to 5, further **characterised in that**
a navigation device (APS) is provided with at least two groups of navigation information to be output which are assigned to different urgency stages, whereby the navigation information of higher priority relates to the router pattern in a closer region and that with lower priority to the router pattern in a more distant region.

7. Information system according to one of the claims 1 to 6, further **characterised in that**
an emergency call information item is provided which can be output with priority in relation to the at least one vehicle guiding information item or parallel to it with the same priority.

## Revendications

1. Système d'information dans un véhicule, avec :
- plusieurs sources d'informations en vue de la délivrance d'une information respectivement correspondante en présence d'une condition de génération d'information correspondante
**caractérisé en ce que**
- les diverses sources d'informations comprennent au moins deux sources d'informations se rapportant à la conduite d'un véhicule (19 à 22) d'un type différent en vue de la délivrance d'une information respective se rapportant à la conduite du véhicule, dont les conditions de génération correspondantes concordent les unes avec les autres de telle manière qu'à chaque moment au maximum une des sources d'informations se rapportant à la conduite du véhicule délivre une information relative à la conduite du véhicule correspondante,
les sources d'informations se rapportant à la conduite du véhicule (19 à 22) d'un type différent comprenant différents types de systèmes d'aide au conducteur, dont le point commun est qu'ils délivrent des informations se rapportant à la conduite du véhicule, lesquelles nécessitent une réaction rapide du conducteur.

2. Système d'information selon la revendication 1,
**caractérisé en ce que**
- les diverses sources d'informations comprennent au moins deux sources d'informations se rapportant à la conduite du véhicule (19 à 22) d'un type différent en vue de la délivrance d'une information correspondante se rapportant à la conduite du véhicule et au moins une autre source d'information en vue de la délivrance d'une information ne se rapportant pas à la conduite du véhicule et qu'il est prévu des moyens de gestion des informations (15), lesquels commandent les délivrances d'information des sources d'information conformément à un ordre d'importance par défaut comprenant plusieurs niveaux d'urgence (16, 25, 53), parmi lesquels un niveau d'urgence prioritaire de la plus haute priorité pour la délivrance des informations d'au moins une information se rapportant à la conduite du véhicule et un ou plusieurs niveau(x) d'urgence secondaire(s) pour la délivrance d'information d'au moins une information ne se rapportant pas à la conduite du véhicule sont prévus, la délivrance d'informations ne se rapportant pas à la conduite du véhicule d'un ou plusieurs niveau(x) d'urgence secondaire(s) étant subordonnée aux moyens de gestion des informations ou ceux-ci ne les autorisant que pour une intensité réduite, tant qu'une information se rapportant à la conduite du véhicule du niveau d'urgence prioritaire est délivrée.

3. Système d'information selon la revendication 2,
**Caractérisé en outre en ce que**
les informations délivrables par les sources d'informations sont associées aux différents niveaux d'urgence en fonction des temps de réponse correspondants de telle manière que le temps de réponse associé à un niveau d'urgence d'une moindre importance est plus grand que le temps de réponse associé à un niveau d'urgence de plus grande importance, et les niveaux d'urgence des moyens de gestion des informations sont traités séquentiellement selon une priorité décroissante en rapport avec les informations à délivrer.

4. Système d'information selon l'une quelconque des revendications 2 ou 3,
**caractérisé en outre en ce qu'**il est prévu une délivrance séquentielle d'informations disponibles, qui relèvent respectivement du ou des même(s) niveau(x) d'urgence que l'un ou plusieurs niveau(x) d'urgence secondaire(s), sous la commande des moyens de gestion des informations.

5. Système d'information selon l'une quelconque des revendications 1 à 4,
**caractérisé en outre en ce qu'**il est prévu, durant la délivrance d'informations se rapportant à la conduite du véhicule, un commutateur de mise en service de silencieux sur les sorties acoustiques d'autres informations relevant d'une moindre priorité et/ou durant l'émission acoustique d'une information respective ne se rapportant pas à la conduite du véhicule de plus haute priorité, une réduction d'intensité de l'émission acoustique des informations ne se rapportant pas à la conduite du véhicule de moindre priorité.

6. Système d'information selon l'une quelconque des revendications 2 à 5,
**caractérisé en outre en ce qu'**il est prévu un dispositif de navigation (APS) avec au moins deux groupes d'informations de navigation à délivrer, qui sont associés à divers niveaux d'urgence, les informations de navigation de plus haute priorité se rapportant au tracé d'itinéraire dans un périmètre proche et celles de moindre priorité se rapportant au tracé d'itinéraire dans un périmètre plus éloigné.

7. Système d'information selon l'une quelconque des revendications 1 à 6,
**caractérisé en outre en ce qu'**il est prévu une information de détresse, qui peut être délivrée en priorité par rapport à au moins une information se rapportant à la conduite du véhicule ou parallèlement à celle-ci avec une priorité égale.
